# EUROPÄISCHE PATENTSCHRIFT

(11) **EP 3 514 814 B1**
(45) Veröffentlichungstag und Bekanntmachung des Hinweises auf die Patenterteilung: **07.04.2021**
(21) Anmeldenummer: 19151301.9
(22) Anmeldetag: 11.01.2019
(51) Int. Cl.: H01H 9/54

(54) **ELEKTRISCHE SCHUTZSCHALTANORDNUNG**
ELECTRICAL CIRCUIT BREAKER ASSEMBLY
DISPOSITIF DE CIRCUIT DE PROTECTION ÉLECTRIQUE

(30) Priorität: 22.01.2018 DE 102018101311
(43) Veröffentlichungstag der Anmeldung: 24.07.2019
(73) Patentinhaber: Eaton Intelligent Power Limited, Dublin 4 (IE)
(72) Erfinder: ASKAN, Kenan, 1090 Wien (AT); BARTONEK, Michael, 1080 Vienna (AT)
(74) Vertreter: Eaton IP Group EMEA

(56) Entgegenhaltungen:
- WO-A1-92/10018
- WO-A1-2014/094847
- WO-A1-2018/072983
- GB-A- 2 520 959
- US-A1- 2016 322 809

## Beschreibung

Die Erfindung betrifft ein Niederspannungs-Schutzschaltgerät gemäß dem Patentanspruch 1.

Es ist bekannt elektrische Ströme durch Parallelschaltung auf mehrere Zweige aufzuteilen, wodurch der gesamte Strom entsprechend Kirchhoffs erstem Gesetz auf die einzelnen Parallelzweige aufgeteilt wird.

Es sind weiters sog. hybride Schutzschaltgerät etwa aus der WO 2015/028634 A1 der Anmelderin bekannt. Derartige hybride Schaltgeräte weisen zahlreiche Vorteile gegenüber herkömmlichen rein mechanischen Schutzschaltern auf. Allerdings hat sich gezeigt, dass es nicht möglich ist die Strombelastbarkeit einer elektrischen Strecke bzw. deren notfalltechnische Absicherung durch parallel Schalten hybrider Schaltgeräte gemäß der WO 2015/028634 A1 zu erhöhen. Gewisse Eigenheiten der, in derartigen Schaltgeräten verbauten mechanischen Schaltkontakte sowie der Halbleiterelemente führt zu einer erheblichen Drift der Innenwiderstände derartiger parallel geschalteter hybrider Schaltgeräte, wodurch gleichzeitig auch die Stromaufteilung zwischen derartigen Schaltgeräten driftet. Innerhalb kurzer Zeit nach Inbetriebnahme führt dies dazu, dass die Stromaufteilung ungleichmäßig ist.

Die WO 2018/072983 zeigt ein hybrides Niederspannungsschutzschaltgerät, wobei es sich um eine Weiterentwicklung des Schaltgeräts gemäß der WO 2015/028634 A1 handelt.

Die US 2016/322809 A1 beschreibt einen Schutzschalter zum lichtbogenfreien Unterbrechen eines DC-Netzes nach dem Oberbegriff des Anspruchs 1. Bei einem Schalter gemäß der US 2016/322809 A1 besteht keine Möglichkeit bedarfsabhängig die Strombelastbarkeit zu erhöhen.

Die WO 92/10018 A1 beschreibt ein ausfallssicheres Halbleiterschutzschaltgerät (Solid State). Ein reines Halbleiterschutzschaltgerät weist, im Gegensatz zu einem gegenständlichen hybriden Schaltgerät, keine mechanischen Schalter im Stromweg auf.

Aufgabe der Erfindung ist es daher ein Niederspannungs-Schutzschaltgerät der vorstehend genannten Art anzugeben, mit welchem die eingangs genannten Nachteile vermieden werden können, mit welchem einfach die Strombelastbarkeit eines Niederspannungs-Schutzschaltgeräts sicher und dauerhaft erhöht werden kann.

Erfindungsgemäß wird dies durch die Merkmale des Patentanspruches 1 erreicht.

Dadurch ist es möglich eine hybride Außenleiterstrecken durch parallel schalten wenigstens einer Bypassstrecke zu entlasten, ohne dass es dazu kommt, dass die gesamte Strombelastung oder zumindest ein überwiegender Teil der Strombelastung von nur einer der beteiligten Strecken bewältigt werden muss. Dadurch kann verhindert werden, dass eine der beteiligten Strecken durch übermäßige Verlustleistung schneller altert und ausfällt, als die wenigstens eine weitere Strecke. Dadurch kann weiters verhindert werden, dass es im Falle einer Notabschaltung zu einem Totalausfall kommt.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste Ausführungsform einer gegenständlichen elektrischen Schutzschaltungsanordnung;
Fig. 2 eine erste Ausführungsform eines diskreten Niederspannungs-Schutzschaltgeräts für eine gegenständliche elektrische Schutzschaltungsanordnung;
Fig. 3 eine zweite Ausführungsform einer gegenständlichen elektrischen Schutzschaltungsanordnung mit sieben Niederspannungs-Schutzschaltgeräten gemäß Fig. 2;
Fig. 4 eine zweite Ausführungsform eines diskreten Niederspannungs-Schutzschaltgeräts; und
Fig. 5 eine dritte Ausführungsform einer gegenständlichen elektrischen Schutzschaltungsanordnung.

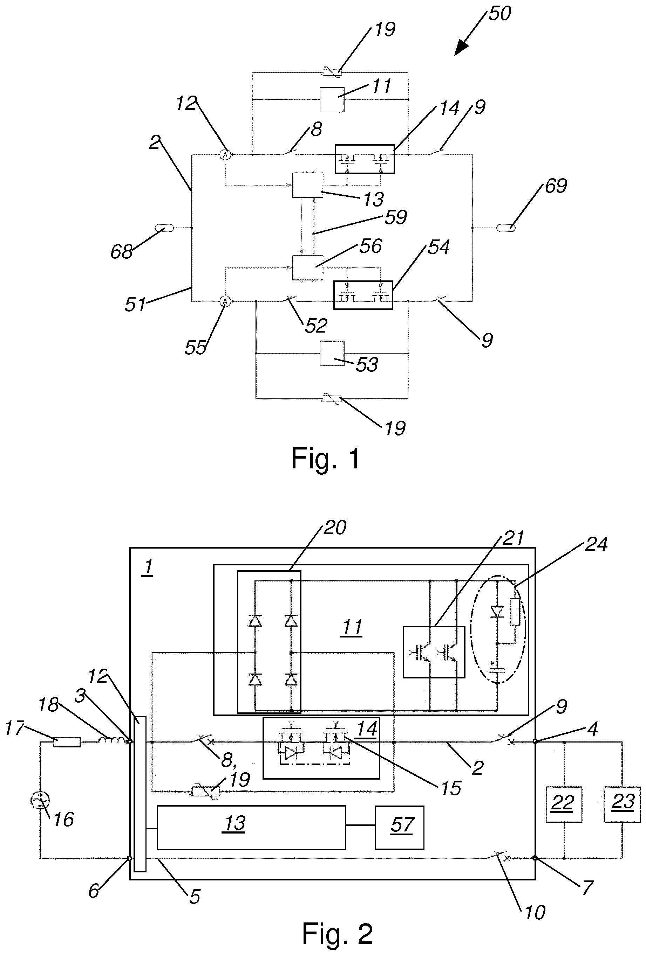

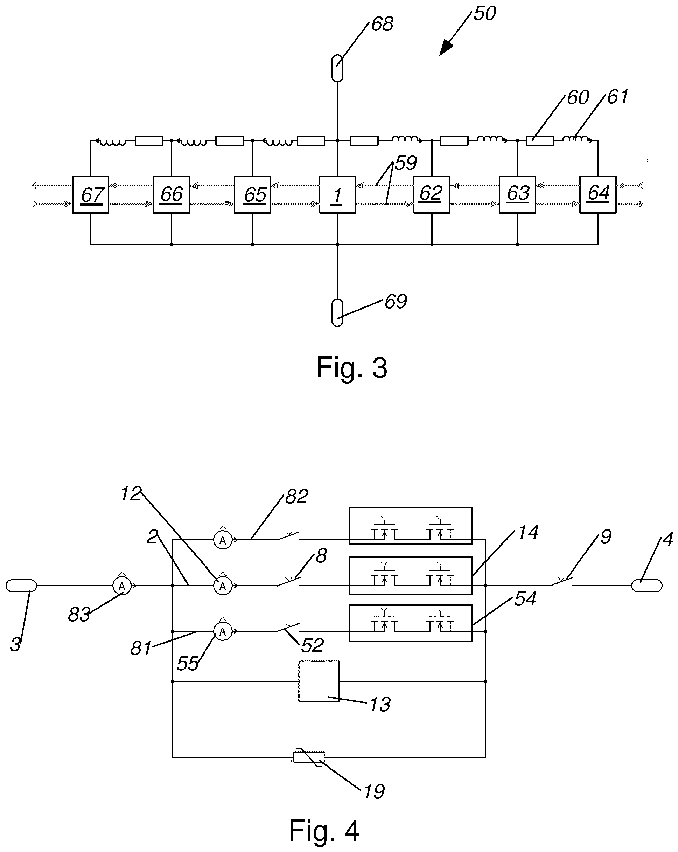

Die Fig. 1 und 3 zeigen jeweils eine elektrische Schutzschaltungsanordnung 50 umfassend eine erste Außenleiterstrecke 2 und eine zweiten Außenleiterstrecke 51, wobei die erste Außenleiterstrecke 2 schaltungstechnisch parallel zur zweiten Außenleiterstrecke 51 angeordnet ist, wobei in der ersten Außenleiterstrecke 2 ein erster mechanischer Bypassschalter 8 angeordnet ist, wobei eine erste Halbleiterschaltungsanordnung 11 parallel zum ersten Bypassschalter 8 geschaltet ist, wobei in der ersten Außenleiterstrecke 2 eine zweite Halbleiterschaltungsanordnung 14 schaltungstechnisch seriell zum ersten Bypassschalter 8 und parallel zur ersten Halbleiterschaltungsanordnung 11 angeordnet ist, wobei in der ersten Außenleiterstrecke 2 eine erste Strommessanordnung 12 angeordnet ist, welche mit einer ersten elektronischen Steuereinheit 13 verbunden ist, wobei die erste elektronische Steuereinheit 13 dazu ausgebildet ist, den ersten Bypassschalter 8, die erste Halbleiterschaltungsanordnung 11 und die zweite Halbleiterschaltungsanordnung 14 anzusteuern, wobei in der zweiten Außenleiterstrecke 51 ein zweiter mechanischer Bypassschalter 52 angeordnet ist, wobei eine dritte Halbleiterschaltungsanordnung 53 parallel zum zweiten Bypassschalter 52 geschaltet ist, wobei in der zweiten Außenleiterstrecke 51 eine vierte Halbleiterschaltungsanordnung 54 schaltungstechnisch seriell zum zweiten Bypassschalter 52 und parallel zur dritten Halbleiterschaltungsanordnung 53 angeordnet ist, wobei in der zweiten Außenleiterstrecke 51 eine zweite Strommessanordnung 55 angeordnet ist, welche mit einer zweiten elektronischen Steuereinheit (56) verbunden ist, wobei die zweite elektronische Steuereinheit 56 dazu ausgebildet ist, den zweiten Bypassschalter 52, die dritte Halbleiterschaltungsanordnung 53 und die vierte Halbleiterschaltungsanordnung 54 anzusteuern.

Die erste elektronische Steuereinheit 13 und die zweite elektronische Steuereinheit 56 sind nachrichtentechnisch verbunden, wobei die erste elektronische Steuereinheit 13 die zweite Halbleiterschaltungsanordnung 14 und die zweite elektronische Steuereinheit 56 die vierte Halbleiterschaltungsanordnung 54 zum Angleichen einer ersten Stromstärke über die erste Außenleiterstrecke 2 und einer zweiten Stromstärke über die zweite Außenleiterstrecke 51 regeln, und wobei die erste elektronische Steuereinheit 13 und die zweite elektronische Steuereinheit 56 bei einer ersten Stromstärke und einer zweiten Stromstärke unterhalb eines vorgebbaren Grenzwertes die zweite Außenleiterstrecke 51 abschalten. Dadurch ist es möglich mehrere hybride Außenleiterstrecken 2, 51 parallel zu schalten, ohne dass es dazu kommt, dass die gesamte Strombelastung oder zumindest ein überwiegender Teil der Strombelastung von nur einer der beteiligten Außenleiterstrecken 2, 51 bewältigt werden kann. Dadurch kann verhindert werden, dass eine der beteiligten Außenleiterstrecken 2, 51 durch übermäßige Verlustleistung schneller altert und ausfällt, als die wenigstens eine andere Außenleiterstrecke 2, 51. Dadurch kann weiters verhindert werden, dass es im Falle einer Notabschaltung zu einem Totalausfall einer der Außenleiterstrecken 2, 51 kommt.

Die gegenständliche Vorrichtung bzw. Anordnung gemäß den Fig. 1 bis 3 betrifft eine elektrische Schutzschaltungsanordnung 50, welche entweder durch Zusammenschalten mehrerer unabhängiger bzw. eigenständiger oder diskreter Niederspannungs-Schutzschaltgeräte 1 umgesetzt bzw. implementiert werden kann oder aber innerhalb eines einzelnen, entsprechend ausgebildeten Schutzschaltgeräts 1.

Einleitend werden die einzelnen erforderlichen Komponenten anhand des in Fig. 2 dargestellten Niederspannungs-Schutzschaltgeräts 1 beschrieben. Das betreffende Niederspannungs-Schutzschaltgerät 1 zeigt die erste von zwei Außenleiterstrecken 2.

Bei dem gegenständlichen Niederspannungs-Schutzschaltgerät 1 wie auch dem Schutzschaltgerät gemäß der WO 2015/028634 A1 handelt es sich um Niederspannungs-Schutzschaltgeräte. Als Niederspannung wird wie an sich üblich der Bereich bis 1000V Wechselspannung bzw. 1500V Gleichspannung bezeichnet.

Das Schutzschaltgerät 1 gemäß Fig. 2 weist eine Außenleiterstrecke 2 sowie eine Neutralleiterstrecke 5 auf. Die erste Außenleiterstrecke 2 verläuft durch das Schutzschaltgerät 1 von einem Außenleiterversorgungsanschluss 3 zu einem Außenleiterlastanschluss 4. Die Neutralleiterstrecke 5 verläuft durch das Schutzschaltgerät 1 von einem Neutralleiteranschluss 6 zu einem Neutralleiterlastanschluss 7. Die betreffenden Anschlüsse 3, 4, 6, 7 sind jeweils bevorzugt als Schraubanschlussklemmen bzw. Steckanschlussklemmen ausgebildet, und in dem Schutzschaltgerät 1 von außen zugänglich angeordnet.

Das Schutzschaltgerät 1 weist bevorzugt ein Isolierstoffgehäuse auf.

In der erste Außenleiterstrecke 2 ist ein erster mechanischer Bypassschalter 8, bevorzugt mit einfacher Kontaktunterbrechung, angeordnet. Bei dem Schalter gemäß Fig. 2 ist in der Außenleiterstrecke 2 weiters ein erster mechanischer Trennschalter 9 seriell zum ersten Bypassschalter 8 angeordnet. In der Neutralleiterstrecke 5 ist ein zweiter mechanischer Trennschalter 10 angeordnet. Parallel zum ersten Bypassschalter 8 ist eine erste Halbleiterschaltungsanordnung 11 geschaltet.

Weiters ist parallel zum ersten Bypassschalter 8 ein Überspannungsableiter 19 geschaltet.

Das Schutzschaltgerät 1 weist weiters eine erste Strommessanordnung 12 auf, welche in der ersten Außenleiterstrecke 2 angeordnet ist, und welche bevorzugt umfassend einem Shunt-Widerstand ausgebildet ist.

Die erste Strommessanordnung 12 ist mit einer ersten elektronischen Steuereinheit 13 des Schutzschaltgeräts 1 verbunden, welche bevorzugt umfassend einen Mikrocontroller bzw. Mikroprozessor ausgebildet ist. Die erste elektronische Steuereinheit 13 ist dazu ausgebildet, den ersten Bypassschalter 8 und die erste Halbleiterschaltungsanordnung 11, sowie den ersten mechanischen Trennschalter 9 und den zweiten mechanischen Trennschalter 10, anzusteuern, daher diese vorgebbar zu betätigen bzw. zu schalten. Hiezu ist die erste elektronische Steuereinheit 13 mit der ersten Halbleiterschaltungsanordnung 11, sowie weiters mit, insbesondere elektromagnetischen, Betätigungselementen der mechanischen Schalter, daher des ersten Bypassschalters 8, des ersten mechanischen Trennschalters 9 und des zweiten mechanischen Trennschalters 10 bevorzugt schaltungstechnisch verbunden. Die entsprechenden Verbindungen ausgehend von der ersten elektronischen Steuereinheit 13 sind nicht Fig. 2 dargestellt.

Die erste Halbleiterschaltungsanordnung 11 weist gemäß der Ausführungsform in Fig. 2 eine Gleichrichterschaltung 20, welche bevorzugt als Vollbrücke ausgebildet ist, sowie, bei der gegenständlichen Ausführungsform zwei Leistungshalbleiter 21, welche gegenständlich als IGBT ausgebildet sind, als eigentliche Schalt- bzw. Regelelemente auf. Dabei kann auch ein größerer Leistungshalbleiter 21 vorgesehen sein. Die gegenständliche Vorrichtung bzw. Anordnung ist unabhängig von der konkreten Implementierung der ersten Halbleiterschaltungsanordnung 11.

In Fig. 2 ist neben dem eigentlichen Schutzschaltgerät 1 weites die elektrische Umgebung angedeutet. Dabei ist das Versorgungsnetz durch die AC/DC-Netzspannungsquelle 16, den Netzinnenwiderstand 17 und die Netzinduktivität 18 dargestellt. Weiters ist eine elektrische Last 23, sowie ein elektrischer Fehler 22 in Form eines Kurzschlusses dargestellt.

Bevorzugt ist vorgesehen, dass die erste elektronische Steuereinheit 13 weiterhin dazu ausgebildet ist, den ersten mechanischen Trennschalter 9 zu betätigen.

Ebenso ist bevorzugt vorgesehen, dass in der Neutralleiterstrecke 5 ein zweiter mechanischer Trennschalter 10 angeordnet ist, und dass die erste elektronische Steuereinheit 13 vorzugsweise dazu ausgebildet ist, den zweiten mechanischen Trennschalter 10 zu betätigen. Weiters ist parallel zum ersten Bypassschalter 8 sowie der ersten Halbleiterschaltungsanordnung 11 sowie seriell zum ersten Trennschalter 9 bevorzugt ein Überspannungsableiter 19, insbesondere ein Varistor, vorzugsweise ein MOV, schaltungstechnisch angeordnet. MOV steht dabei für Metall Oxide Varistor.

Es ist vorgesehen, dass in der ersten Außenleiterstrecke 2 eine zweite Halbleiterschaltungsanordnung 14 schaltungstechnisch seriell zum ersten Bypassschalter 8 und parallel zur ersten Halbleiterschaltungsanordnung 11 angeordnet ist.

Durch die zweite Halbleiterschaltungsanordnung 14 kann sowohl die Belastung des ersten Bypassschalters 8 als auch der ersten Halbleiterschaltungsanordnung 11 verringert werden. Dadurch kann erreicht werden, dass der Strom bereits bei deutlich geringerer Stromstärke als bei herkömmlichen Schutzschaltgeräten auf die erste Halbleiterschaltungsanordnung 11 kommutiert, wodurch die Belastung der ersten Halbleiterschaltungsanordnung 11 verringert und deren Lebensdauer vergrößert werden kann. Dadurch kann das Auftreten eines Lichtbogens an dem ersten Bypassschalter 8 im Wesentlichen gänzlich vermieden werden, wodurch die Belastung der entsprechenden Schaltkontakte verringert und deren Lebensdauer vergrößert werden kann.

Durch die gegenständlichen Maßnahmen können weitere Vorteile erzielt werden. Da beim Abschalten kein Lichtbogen auftritt, muss auch kein Lichtbogen gelöscht werden. Es entstehen keine heißen ionisierten Gase, welche erst gekühlt werden müsste, um ein erneutes Zünden eines Lichtbogens zu verhindern. Dadurch kann sowohl die Belastbarkeit der ersten Halbleiterschaltungsanordnung 11 reduziert werden, als auch der gesamte Abschaltvorgang weiter beschleunigt werden, da ein erneutes Zünden eines Lichtbogens gegenständlich nicht mehr zu befürchten ist. Alternativ kann auch die Belastbarkeit der ersten Halbleiterschaltungsanordnung 11 unverändert bleiben und die Öffnungsgeschwindigkeit des ersten Bypassschalters 8 reduziert werden, wodurch dieser einfacher ausgebildet werden kann.

Durch das schnelle Abschalten eines Kurzschluss- bzw- Überlaststromes wird weniger Energie als sonst in Form von Streuinduktivitäten bzw. in der Netzinduktanz gespeichert, wodurch der erste Überspannungsableiter 19 sowie der Snubber 24 geschont wird. Dieser kann aufgrund weiterer Effekte auch kleiner dimensioniert werden.

Da kein Schaltlichtbogen auftritt, ist der Spannungsabfall an der ersten Halbleiterschaltungsanordnung 11 nicht durch die Lichtbogenspannung limitiert.

Bevorzugt ist vorgesehen, dass die zweite Halbleiterschaltungsanordnung 14 bzw. die vierte Halbleiterschaltungsanordnung 54 bidirektional ausgebildet ist. Besonders bevorzugt ist die zweite Halbleiterschaltungsanordnung 14 und die vierte Halbleiterschaltungsanordnung 54 als vier Quadranten-Schaltung ausgebildet, für beide Stromrichtungen und beide Spannungspolaritäten.

Weiters ist bevorzugt vorgesehen, dass die zweite Halbleiterschaltungsanordnung 14 und die vierte Halbleiterschaltungsanordnung 54 umfassend Niederspanungs-MOSFET 15 ausgebildet ist. Die zweite Halbleiterschaltungsanordnung 14 und die vierte Halbleiterschaltungsanordnung 54 befinden sich ständig im Stromfluss, weshalb der Innenwiderstand derselben relevant ist, um eine zu große Verlustleistung an dieser Stelle zu vermeiden.

Bevorzugt sind die Niederspanungs-MOSFET 15 als 20-30V MOSFET gewählt, aufgrund deren sehr geringen Innenwiderstandes, sowie um die Verlustleitung im regulären Betrieb gering zu halten. Der Spannungsabfall an den Niederspanungs-MOSFET 15 dient lediglich dazu den Strom zum Kommutieren auf die erste Halbleiterschaltungsanordnung 11 zu bringen.

Aufgrund der "intrinsic body diode" und Betrieb der MOSFET im dritten Quadranten sind lediglich zwei derartige Niederspanungs-MOSFET 15 für einen bidirektionalen Schalter erforderlich. Durch die hohe Leitfähigkeit können hohe Ströme bei geringen Gate-Spannungen erreicht werden.

Die erste Halbleiterschaltungsanordnung 11 ist entsprechend belastbar ausgebildet, um die hohen Ströme und Spannungsspitzen bei einem Kurzschluss zu schalten. Die erste Halbleiterschaltungsanordnung 11 kann ausgeschaltet werden, sobald die Kontakte des Bypassschalters 8 genügend Kontaktabstand aufweisen.

Die MOSFET 15 weisen jeweils bevorzugt eine Antiparallel-Diode auf, welche auch als Monolithic Body Diode bezeichnet wird.

Es ist weiters vorgesehen, dass die elektrische Schutzschaltungsanordnung 50 eine erste Außenleiterstrecke 2 und mindestens eine zweiten Außenleiterstrecke 51 aufweist, welche schaltungstechnisch parallel zueinander angeordnet sind.

In der zweiten Außenleiterstrecke 51 ist ein zweiter mechanischer Bypassschalter 52 angeordnet, wobei eine dritte Halbleiterschaltungsanordnung 53, welche entsprechend der ersten Halbleiterschaltungsanordnung 11 ausgebildet ist, parallel zum zweiten Bypassschalter 52 geschaltet ist, wobei in der zweiten Außenleiterstrecke 51 eine vierte Halbleiterschaltungsanordnung 54, welche entsprechend der zweiten Halbleiterschaltungsanordnung 14 ausgebildet ist, schaltungstechnisch seriell zum zweiten Bypassschalter 52 und parallel zur dritten Halbleiterschaltungsanordnung 53 angeordnet ist, wobei in der zweiten Außenleiterstrecke 51, analog der ersten Strommessanordnung 12, eine zweite Strommessanordnung 55 angeordnet ist, welche mit einer zweiten elektronischen Steuereinheit 56, welche entsprechend der ersten elektronischen Steuereinheit 13 ausgebildet ist, verbunden ist, wobei die zweite elektronische Steuereinheit 56 dazu ausgebildet ist, den zweiten Bypassschalter 52, die dritte Halbleiterschaltungsanordnung 53 und die vierte Halbleiterschaltungsanordnung 54 anzusteuern. Die Ausführungen zu den Komponenten der ersten Außenleiterstrecke 2 sind entsprechend anzuwenden.

Besonders bevorzugt ist vorgesehen, dass die erste und die zweite Außenleiterstrecke 2, 51, bis auf Bauteiltoleranzen gleich ausgebildet sind.

Die erste elektronische Steuereinheit 13 und die zweite elektronische Steuereinheit 56 sind zur Übertragung von Daten insbesondere den jeweiligen Stromflussdaten, sowie gegebenenfalls von Steuerbefehlen nachrichtentechnisch verbunden.

Es ist weiters vorgesehen, dass die erste elektronische Steuereinheit 13 die zweite Halbleiterschaltungsanordnung 14, und die zweite elektronische Steuereinheit 56 die vierte Halbleiterschaltungsanordnung 54 zum Angleichen einer ersten Stromstärke über die erste Außenleiterstrecke 2 und einer zweiten Stromstärke über die zweite Außenleiterstrecke 51 regeln. Durch eine derartige aktive Regelung über die zweite bzw. vierte Halbleiterschaltungsanordnung 14, 54 kann der Stromfluss über die erste und die zweite Außenleiterstrecke 2, 51 angeglichen werden. Dadurch kann vermieden werden, dass es zu einer einseitigen Überlastung eines der Zweige kommt.

Es ist weiters zudem bzw. alternativ hierzu vorgesehen, dass die erste elektronische Steuereinheit 13 und die zweite elektronische Steuereinheit 56 bei einer ersten Stromstärke und/oder einer zweiten Stromstärke unterhalb eines vorgebbaren Grenzwertes die zweite Außenleiterstrecke 51 abschalten. Dadurch kann eine der beiden Außenleiterstrecken 2, 51 im Stand by betrieben werden, und erst bei entsprechendem Bedarf zugeschaltet und betrieben werden.

Besonders bevorzugt ist vorgesehen, dass die erste und die zweite elektronische Steuereinheit 13, 56 dazu ausgebildet sind, beide beschriebenen Aufgaben wahrzunehmen.

Dabei ist bevorzugt vorgesehen, dass die erste elektronische Steuereinheit 13 eine Gate-Spannung der zweiten Halbleiterschaltungsanordnung 14 regelt, und dass die zweite elektronische Steuereinheit 56 eine Gate-Spannung der vierten Halbleiterschaltungsanordnung 54 regelt. Dadurch ist eine einfache und effiziente Ansteuerung der zweiten bzw. vierten Halbleiterschaltungsanordnung 14, 54 möglich.

Gemäß einer ersten bevorzugten Ausführung einer gegenständlichen elektrischen Schutzschaltungsanordnung 50 ist vorgesehen, dass die erste Außenleiterstrecke 2, der erste mechanische Bypassschalter 8, die erste Halbleiterschaltungsanordnung 11, die zweite Halbleiterschaltungsanordnung 14, die erste Strommessanordnung 12 und die ersten elektronischen Steuereinheit 13 in einem ersten Niederspannungs-Schutzschaltgerät 1 umfassend ein erstes Isolierstoffgehäuse angeordnet sind, wie dies etwa in Fig. 2 dargestellt ist. Das betreffende erste Niederspannungs-Schutzschaltgerät 1 weist zudem eine erste Kommunikationsschnittstelle 57 auf, welche mit der ersten elektronischen Steuereinheit 13 nachrichtentechnisch verbunden ist.

Die erste Kommunikationsschnittstelle 57 kann an sich entsprechend jedem Datenübertragungsverfahren ausgebildet sein. Bevorzugt ist vorgesehen, dass die erste Kommunikationsschnittstelle 57 eine leitungsgebundene Schnittstelle ist, etwa zufolge Ethernet, TCP/IP bzw. EIB, wobei selbstverständlich auch andere Methoden bzw. Standards verwendet werden können.

Gemäß der ersten bevorzugten Ausführung einer gegenständlichen elektrischen Schutzschaltungsanordnung 50 ist ebenfalls vorgesehen, dass die zweite Außenleiterstrecke 51, der zweite mechanische Bypassschalter 52, die dritte Halbleiterschaltungsanordnung 53, die vierte Halbleiterschaltungsanordnung 54, die zweite Strommessanordnung 55 und die zweite elektronischen Steuereinheit 56 in einem zweiten Niederspannungs-Schutzschaltgerät 62 umfassend ein zweites Isolierstoffgehäuse angeordnet sind, dass das zweite Niederspannungs-Schutzschaltgerät 62 eine zweite Kommunikationsschnittstelle aufweist, welche mit der zweiten elektronischen Steuereinheit 56 nachrichtentechnisch verbunden ist. Auch das zweite Niederspannungs-Schutzschaltgerät 62 ist bevorzugt entsprechend Fig. 2 ausgebildet.

Gemäß der ersten bevorzugten Ausführung einer gegenständlichen elektrischen Schutzschaltungsanordnung 50 ist weiters vorgesehen, dass die erste Kommunikationsschnittstelle 57 mit der zweiten Kommunikationsschnittstelle nachrichtentechnisch verbunden ist. Dadurch können, je Erfordernis unterschiedliche Niederspannungs-Schutzschaltgeräte 1, 62, 63, 64, 65, 66, 67 parallel zusammen geschaltet werden.

Bevorzugt ist dabei vorgesehen, dass ein derartiger Aufbau aus diskreten Niederspannungs-Schutzschaltgeräten 1, 62, 63, 64, 65, 66, 67 kaskadierbar ist.

Fig. 3 zeigt einen entsprechenden Aufbau mit einem ersten Niederspannungs-Schutzschaltgerät 1, einem zweiten Niederspannungs-Schutzschaltgerät 62, einem dritten Niederspannungs-Schutzschaltgerät 63, einem vierten Niederspannungs-Schutzschaltgerät 64, einem fünften Niederspannungs-Schutzschaltgerät 65, einem sechsten Niederspannungs-Schutzschaltgerät 66 und einem siebenten Niederspannungs-Schutzschaltgeräte 67, wobei jeweils nur die Außenleiteranschlüsse dargestellt sind, und zudem auch Neutralleiterstrecken je Niederspannungs-Schutzschaltgerät 1, 62, 63, 64, 65, 66, 67 vorgesehen sein können.

Die einzelnen Niederspannungs-Schutzschaltgeräte 1, 62, 63, 64, 65, 66, 67 sind mit den gemeinsamen Anschlüssen 68, 69 elektrisch verbunden. Weiters ist in Fig. 3 der Leitungswiderstand 60 sowie die Leitungsinduktanz 61 dargestellt.

Gemäß einer zweiten bevorzugten Ausführung einer gegenständlichen elektrischen Schutzschaltungsanordnung 50 ist vorgesehen, dass die erste Außenleiterstrecke 2, der erste mechanische Bypassschalter 8, die erste Halbleiterschaltungsanordnung 11, die zweite Halbleiterschaltungsanordnung 14, die erste Strommessanordnung 12 und die ersten elektronischen Steuereinheit 13, die zweite Außenleiterstrecke 51, der zweite mechanische Bypassschalter 52, die dritte Halbleiterschaltungsanordnung 53, die vierte Halbleiterschaltungsanordnung 54, die zweite Strommessanordnung 55 und die zweite elektronischen Steuereinheit 56 gemeinsam in ein und demselben ersten Niederspannungs-Schutzschaltgerät 1 umfassend ein erstes Isolierstoffgehäuse angeordnet sind, und dass die erste elektronische Steuereinheit 13 mit der zweiten elektronischen Steuereinheit 56 nachrichtentechnisch, insbesondere schaltungstechnisch, verbunden ist. Fig. 1 zeigt einen entsprechenden Aufbau, welcher bereits in dieser Form umgesetzt werden kann, oder aber noch um eine Neutralleiterstrecke 5 ergänzt sein kann.

In diesem Zusammenhang ist bevorzugt vorgesehen, dass die erste elektronische Steuereinheit 13 und die zweite elektronische Steuereinheit 56 einstückig, insbesondere zumindest teilweise in einem gemeinsamen Chip, ausgebildet sind.

Weiters ist bevorzugt vorgesehen, dass die elektrische Schutzschaltungsanordnung 50 wenigstens eine dritte Außenleiterstrecke aufweist, welche zur ersten Außenleiterstrecke 2 und zweiten Außenleiterstrecke 51 schaltungstechnisch parallel angeordnet ist, wobei selbstverständlich noch weitere Außenleiterstrecken parallel zur ersten und zweiten Außenleiterstrecke 2, 51 vorgesehen sein können.

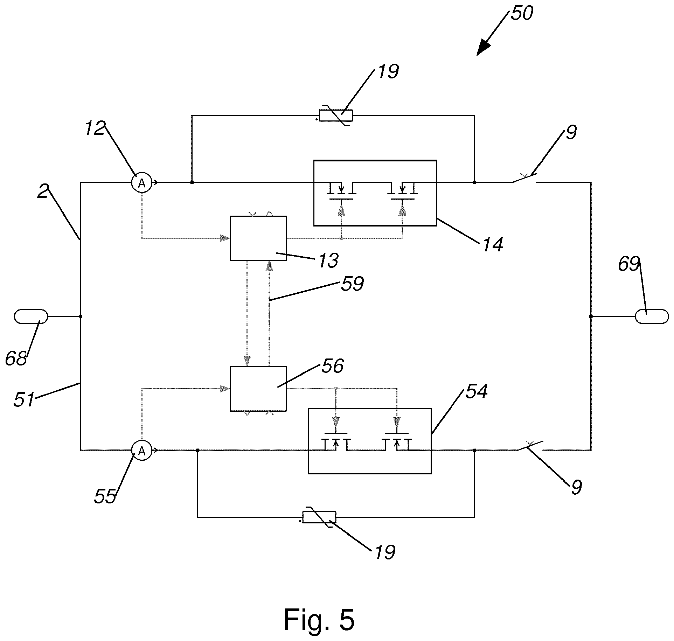

Fig. 5 zeigt eine bevorzugte weitere Ausführung einer elektrischen Schutzschaltungsanordnung 50 umfassend eine erste Außenleiterstrecke 2 und eine zweiten Außenleiterstrecke 51, wobei die erste Außenleiterstrecke 2 schaltungstechnisch parallel zur zweiten Außenleiterstrecke 51 angeordnet ist, wobei in der ersten Außenleiterstrecke 2 eine zweite Halbleiterschaltungsanordnung 14 angeordnet ist, wobei in der ersten Außenleiterstrecke 2 eine erste Strommessanordnung 12 angeordnet ist, welche mit einer ersten elektronischen Steuereinheit 13 verbunden ist, wobei die erste elektronische Steuereinheit 13 dazu ausgebildet ist, die zweite Halbleiterschaltungsanordnung 14 anzusteuern, wobei in der zweiten Außenleiterstrecke 51 eine vierte Halbleiterschaltungsanordnung 54 angeordnet ist, wobei in der zweiten Außenleiterstrecke 51 eine zweite Strommessanordnung 55 angeordnet ist, welche mit einer zweiten elektronischen Steuereinheit 56 verbunden ist, wobei die zweite elektronische Steuereinheit 56 dazu ausgebildet ist, die vierte Halbleiterschaltungsanordnung 54 anzusteuern, wobei die erste elektronische Steuereinheit 13 und die zweite elektronische Steuereinheit 56 nachrichtentechnisch verbunden sind.

Die erste elektronische Steuereinheit 13 regelt die zweite Halbleiterschaltungsanordnung 14 und die zweite elektronische Steuereinheit 56 regelt die vierte Halbleiterschaltungsanordnung 54 zum Angleichen einer ersten Stromstärke über die erste Außenleiterstrecke 2 und einer zweiten Stromstärke über die zweite Außenleiterstrecke 51, und/oder wobei die erste elektronische Steuereinheit 13 und die zweite elektronische Steuereinheit 56 bei einer ersten Stromstärke und/oder einer zweiten Stromstärke unterhalb eines vorgebbaren Grenzwertes die zweite Außenleiterstrecke 51 abschalten.

Dadurch ist es möglich mehrere Solid State Außenleiterstrecken, entweder innerhalb eines einzigen Schaltgeräts oder aber durch parallel Schaltung mehrerer Schaltgeräte, parallel zu schalten, ohne dass es dazu kommt, dass die gesamte Strombelastung oder zumindest ein überwiegender Teil der Strombelastung von nur einer der beteiligten Außenleiterstrecken 2, 51 bewältigt werden kann. Dadurch kann verhindert werden, dass eine der beteiligten Außenleiterstrecken 2, 51 durch übermäßige Verlustleistung schneller altert und ausfällt, als die wenigstens eine andere Außenleiterstrecke 2, 51. Dadurch kann weiters verhindert werden, dass es im Falle einer Notabschaltung zu einem Totalausfall einer der Außenleiterstrecken 2, 51 kommt.

Sämtliche Ausführungen zu den Ausführungsformen gemäß den Fig. 1 bis 3 sind - sofern diese nicht im offensichtlichen Widerspruch zur elektrischen Schutzschaltungsanordnung 50 gemäß Fig. 5 stehen anzuwenden. Insbesondere sämtliche Ausführungen zu Einsatzumgebung und den bevorzugten Ausführungsformen der beteiligten Komponenten, weshalb gegenständlich auf eine Wiedergabe dieser bevorzugten Ausbildungen verzichtet wird. Diese betreffen insbesondere die Implementierung der elektrischen Schutzschaltungsanordnung 50 in einem oder mehreren Geräten.

Gegenüber den Ausführungsform gemäß den Fig. 1 und 2 weist die elektrische Schutzschaltungsanordnung 50 gemäß Fig. 5 keine erste Halbleiterschaltungsanordnung sowie keine Bypassschalter auf. Es handelt sich dabei um einen sog. Solid State Ciruit Breaker.

Es wurde betreffend der Bezeichnung der einzelnen Halbleiterschaltungsanordnungen die eingangs eingeführte Nomenklatur beibehalten.

Anders als bei den anderen Ausführungsformen sind die zweite Halbleiterschaltungsanordnung 14 und die vierte Halbleiterschaltungsanordnung 54 jeweils umfassend Hochspanungs-MOSFET 15 ausgebildet. Diese tragen die komplette Schaltlast bei dieser Art von Schaltungsanordnung. Es können auch andere Arten von Halbleitern vorgesehen sein, etwa IGBT.

Fig. 4 zeigt eine bevorzugte Ausführungsform eines Niederspannungs-Schutzschaltgeräts 1 umfassend eine erste Außenleiterstrecke 2 und wenigstens eine erste Bypassstrecke 81, wobei die erste Außenleiterstrecke 2 schaltungstechnisch parallel zur wenigstens einen ersten Bypassstrecke 81 angeordnet ist, wobei in der ersten Außenleiterstrecke 2 ein erster mechanischer Bypassschalter 8 angeordnet ist, wobei eine erste Halbleiterschaltungsanordnung 11 parallel zum ersten Bypassschalter 8 geschaltet ist, wobei in der ersten Außenleiterstrecke 2 eine zweite Halbleiterschaltungsanordnung 14 schaltungstechnisch seriell zum ersten Bypassschalter 8 und parallel zur ersten Halbleiterschaltungsanordnung 11 angeordnet ist, wobei in der ersten Außenleiterstrecke 2 eine erste Strommessanordnung 12 angeordnet ist, welche mit einer ersten elektronischen Steuereinheit 13 verbunden ist, wobei die erste elektronische Steuereinheit 13 dazu ausgebildet ist, den ersten Bypassschalter 8, die erste Halbleiterschaltungsanordnung 11 und die zweite Halbleiterschaltungsanordnung 14 anzusteuern, wobei in der ersten Bypassstrecke 81 ein zweiter mechanischer Bypassschalter 52 angeordnet ist, wobei in der ersten Bypassstrecke 81 eine vierte Halbleiterschaltungsanordnung 54 schaltungstechnisch seriell zum zweiten Bypassschalter 52 angeordnet ist, wobei in der ersten Bypassstrecke 81 eine zweite Strommessanordnung 55 angeordnet ist, welche mit der ersten elektronischen Steuereinheit 13 verbunden ist, wobei die erste elektronische Steuereinheit 13 weiters dazu ausgebildet ist, den zweiten Bypassschalter 52 und die vierte Halbleiterschaltungsanordnung 54 anzusteuern.

Die erste elektronische Steuereinheit 13 regelt die zweite Halbleiterschaltungsanordnung 14 und die vierte Halbleiterschaltungsanordnung 54 zum Angleichen einer ersten Stromstärke über die erste Außenleiterstrecke 2 und einer zweiten Stromstärke über die erste Bypassstrecke 81, und/oder die erste elektronische Steuereinheit 13 schaltet bei einer ersten Stromstärke und/oder einer zweiten Stromstärke unterhalb eines vorgebbaren Grenzwertes die ersten Bypassstrecke 81 ab.

Dadurch ist es möglich eine hybride Außenleiterstrecke 2 durch parallel schalten wenigstens einer Bypassstrecke 81, 82 zu entlasten, ohne dass es dazu kommt, dass die gesamte Strombelastung oder zumindest ein überwiegender Teil der Strombelastung von nur einer der beteiligten Strecken 2, 81, 82 bewältigt werden muss. Dadurch kann verhindert werden, dass eine der beteiligten Strecken durch übermäßige Verlustleistung schneller altert und ausfällt, als die wenigstens eine weitere Strecke. Dadurch kann weiters verhindert werden, dass es im Falle einer Notabschaltung zu einem Totalausfall kommt.

Sämtliche Ausführungen zu den Ausführungsformen gemäß den Fig. 1 bis 3 sind - sofern diese nicht im offensichtlichen Widerspruch zum Niederspannungs-Schutzschaltgerät 1 gemäß Fig. 4 stehen anzuwenden. Insbesondere sämtliche Ausführungen zu Einsatzumgebung und den bevorzugten Ausführungsformen der beteiligten Komponenten, weshalb gegenständlich auf eine Wiedergabe dieser bevorzugten Ausbildungen verzichtet wird.

Gegenüber den Ausführungsform gemäß den Fig. 1 und 2 weist das Niederspannungs-Schutzschaltgerät 1 gemäß Fig. 4 nur eine einzige Außenleiterstrecke 2, umfassend die erste und zweite Halbleiterschaltungsanordnung 11, 14, auf.

Anstelle weiterer Außenleiterstrecken ist wenigstens eine erste Bypassstrecke 81 vorgesehen, welche eine zweite Strommessanordnung 55, einen zweiten Bypassschalter 52 sowie eine vierte Halbleiterschaltungsanordnung 54 aufweist.

Gemäß Fig. 4 ist weiters eine entsprechend ausgebildete zweite Bypassstrecke 82 vorgesehen, wobei weitere Bypassstrecken vorgesehen sein können.

Das Niederspannungs-Schutzschaltgerät 1 weist weiters eine sog. globale Strommessanordnung 83 auf, welches den Gesamtstrom vor der Aufteilung in Teilströme misst und an die erste Steuereinheit 13 übermittelt.

Es wurde betreffend der Bezeichnung der einzelnen Halbleiterschaltungsanordnungen die eingangs eingeführte Nomenklatur beibehalten.

## Patentansprüche

1. Niederspannungs-Schutzschaltgerät (1) umfassend eine erste Außenleiterstrecke (2),
wobei in der ersten Außenleiterstrecke (2) ein erster mechanischer Bypassschalter (8) angeordnet ist, wobei eine erste Halbleiterschaltungsanordnung (11) parallel zum ersten Bypassschalter (8) geschaltet ist, wobei in der ersten Außenleiterstrecke (2) eine zweite Halbleiterschaltungsanordnung (14) schaltungstechnisch seriell zum ersten Bypassschalter (8) und parallel zur ersten Halbleiterschaltungsanordnung (11) angeordnet ist, wobei in der ersten Außenleiterstrecke (2) eine erste Strommessanordnung (12) angeordnet ist, welche mit einer ersten elektronischen Steuereinheit (13) verbunden ist, wobei die erste elektronische Steuereinheit (13) dazu ausgebildet ist, den ersten Bypassschalter (8), die erste Halbleiterschaltungsanordnung (11) und die zweite Halbleiterschaltungsanordnung (14) anzusteuern, **dadurch gekennzeichnet, dass** das Niederspannungs-Schutzschaltgerät (1) wenigstens eine erste Bypassstrecke (81) aufweist, wobei die erste Außenleiterstrecke (2) schaltungstechnisch parallel zur wenigstens einen ersten Bypassstrecke (51,81) angeordnet ist,
wobei in der ersten Bypassstrecke (51,81) ein zweiter mechanischer Bypassschalter (52) angeordnet ist, wobei in der ersten Bypassstrecke (51,81) eine vierte Halbleiterschaltungsanordnung (54) schaltungstechnisch seriell zum zweiten Bypassschalter (52) angeordnet ist, wobei in der ersten Bypassstrecke (51,81) eine zweite Strommessanordnung (55) angeordnet ist, welche mit der ersten elektronischen Steuereinheit (13) verbunden ist, wobei die erste elektronische Steuereinheit (13) weiters dazu ausgebildet ist, den zweiten Bypassschalter (52) und die vierte Halbleiterschaltungsanordnung (54) anzusteuern,
wobei die erste elektronische Steuereinheit (13) die zweite Halbleiterschaltungsanordnung (14) und die vierte Halbleiterschaltungsanordnung (54) zum Angleichen einer ersten Stromstärke über die erste Außenleiterstrecke (2) und einer zweiten Stromstärke über die erste Bypassstrecke (51,81) regelt,
und wobei die erste elektronische Steuereinheit (13) bei einer ersten Stromstärke und einer zweiten Stromstärke unterhalb eines vorgebbaren Grenzwertes die ersten Bypassstrecke (51,81) abschaltet.

2. Niederspannungs-Schutzschaltgerät (1) nach Anspruch 1, **dadurch gekennzeichnet, dass** die zweite Halbleiterschaltungsanordnung (14) und die vierte Halbleiterschaltungsanordnung (54) jeweils umfassend Niederspanungs-Halbleiter, insbesondere Niederspannungs-MOSEFT (15), ausgebildet sind.

3. Niederspannungs-Schutzschaltgerät (1) nach Anspruch 1 oder 2, **dadurch gekennzeichnet, dass** die zweite Halbleiterschaltungsanordnung (14) und die vierte Halbleiterschaltungsanordnung (54) bidirektional, insbesondere als bidirektionaler 4-Quadrantenschalter, ausgebildet sind.

4. Niederspannungs-Schutzschaltgerät (1) nach einem der Ansprüche 1 bis 3, **dadurch gekennzeichnet, dass** das Niederspannungs-Schutzschaltgerät (1) wenigstens eine zweite Bypassstrecke (82) aufweist, welche zur ersten Außenleiterstrecke (2) und zur ersten Bypassstrecke (81) schaltungstechnisch parallel angeordnet ist.

5. Niederspannungs-Schutzschaltgerät (1) nach einem der Ansprüche 1 bis 4, **dadurch gekennzeichnet, dass** das erste Niederspannungs-Schutzschaltgerät (1) eine erste Kommunikationsschnittstelle (57) aufweist, welche mit der ersten elektronischen Steuereinheit (13) nachrichtentechnisch verbunden ist.

## Claims

1. Low-voltage circuit breaker device (1), comprising a first outer conductor line (2),
wherein a first mechanical bypass switch (8) is arranged in the first outer conductor line (2), wherein a first semiconductor circuit assembly (11) is connected in parallel to the first bypass switch (8), wherein a second semiconductor circuit assembly (14) is arranged in the circuit in series with the first bypass switch (8) and parallel to the first semiconductor circuit assembly (11) in the first outer conductor line (2), wherein a first current measuring assembly (12), which is connected to a first electronic control unit (13), is arranged in the first outer conductor line (2), wherein the first electronic control unit (13) is configured to actuate the first bypass switch (8), the first semiconductor circuit assembly (11) and the second semiconductor circuit assembly (14), **characterised in that** the low-voltage circuit breaker device (1) has at least one first bypass line (81), wherein the first outer conductor line (2) is arranged in the circuit in parallel to the at least one first bypass line (51, 81),
wherein a second mechanical bypass switch (52) is arranged in the first bypass line (51, 81), wherein a fourth semiconductor circuit assembly (54) is arranged in the circuit in series with the second bypass switch (52) in the first bypass line (51, 81), wherein a second current measuring assembly (55), which is connected to the first electronic control unit (13), is arranged in the first bypass line (51, 81), wherein the first electronic control unit (13) is further configured to actuate the second bypass switch (52) and the fourth semiconductor circuit assembly (54),
wherein the first electronic control unit (13) regulates the second semiconductor circuit assembly (14) and the fourth semiconductor circuit assembly (54) to balance a first current intensity via the first outer conductor line (2) and a second current intensity via the first bypass line (51, 81),
and
wherein the first electronic control unit (13) switches off the first bypass line (51, 81) if a first current intensity and a second current intensity are less than a predefinable limit value.

2. Low-voltage circuit breaker device (1) according to claim 1, **characterised in that** the second semiconductor circuit assembly (14) and the fourth semiconductor circuit assembly (54) are each formed comprising a low-voltage semiconductor, in particular a low-voltage MOSFET (15).

3. Low-voltage circuit breaker device (1) according to claim 1 or 2, **characterised in that** the second semiconductor circuit assembly (14) and the fourth semiconductor circuit assembly (54) are configured to be bidirectional, in particular as bidirectional four-quadrant switches.

4. Low-voltage circuit breaker device (1) according to any of claims 1 to 3, **characterised in that** the low-voltage circuit breaker device (1) has at least one second bypass line (82), which is arranged in the circuit in parallel to the first outer conductor line (2) and the first bypass line (81).

5. Low-voltage circuit breaker device (1) according to any of claims 1 to 4, **characterised in that** the first low-voltage circuit breaker device (1) has a first communication interface (57), which has a communication connection to the first electronic control unit (13).

## Revendications

1. Disjoncteur basse tension (1) comprenant une première section conductrice externe (2),
dans lequel un premier commutateur de dérivation (8) mécanique est agencé dans la première section conductrice externe (2), dans lequel un premier agencement de circuit à semi-conducteurs (11) est commuté en parallèle au premier commutateur de dérivation (8), dans lequel un second agencement de circuit à semi-conducteurs (14) est agencé dans la première section conductrice externe (2) de manière à être commuté en série par rapport au premier commutateur de dérivation (8) et en parallèle par rapport au premier agencement de circuit à semi-conducteurs (11), dans lequel un premier agencement de mesure de courant (12) relié à une première unité de commande électronique (13) est agencé dans la première section conductrice externe (2), dans lequel la première unité de commande électronique (13) est conçue pour commander le premier commutateur de dérivation (8), le premier agencement de circuit à semi-conducteurs (11) et le second agencement de circuit à semi-conducteurs (14), **caractérisé en ce que** le disjoncteur basse tension (1) présente au moins une première section de dérivation (81), dans lequel la première section conductrice externe (2) est agencée de manière à être commutée en parallèle par rapport à la au moins une première section de dérivation (51, 81),
dans lequel un second commutateur de dérivation (52) mécanique est agencé dans la première section de dérivation (51, 81), dans lequel un quatrième agencement de circuit à semi-conducteurs (54) est agencé dans la première section de dérivation (51, 81) de manière à être commuté en série par rapport au second commutateur de dérivation (52), dans lequel un second agencement de mesure de courant (55) relié à la première unité de commande électronique (13) est agencé dans la première section de dérivation (51, 81), dans lequel la première unité de commande électronique (13) est en outre conçue pour commander le second commutateur de dérivation (52) et le quatrième agencement de circuit à semi-conducteurs (54),
dans lequel la première unité de commande électronique (13) régule le second agencement de circuit à semi-conducteurs (14) et le quatrième agencement de circuit à semi-conducteurs (54) afin d'égaliser une première intensité de courant passant par la première section conductrice externe (2) et une seconde intensité de courant passant par la première section de dérivation (51, 81), et
dans lequel la première unité de commande électronique (13) coupe la première section de dérivation (51, 81) pour une première intensité de courant et une seconde intensité de courant inférieures à une valeur limite pouvant être prédéfinie.

2. Disjoncteur basse tension (1) selon la revendication 1, **caractérisé en ce que** le second agencement de circuit à semi-conducteurs (14) et le quatrième agencement de circuit à semi-conducteurs (54) sont réalisés respectivement avec des semi-conducteurs basse tension, en particulier des semi-conducteurs MOSFET basse tension (15).

3. Disjoncteur basse tension (1) selon la revendication 1 ou 2, **caractérisé en ce que** le second agencement de circuits à semi-conducteurs (14) et le quatrième agencement de circuit à semi-conducteurs (54) sont bidirectionnels, en particulier se présentent sous forme de commutateurs bidirectionnels à 4 quadrants.

4. Disjoncteur basse tension (1) selon l'une quelconque des revendications 1 à 3, **caractérisé en ce que** le disjoncteur basse tension (1) présente au moins une seconde section de dérivation (82) qui est agencée de manière à être commutée en parallèle par rapport à la première section conductrice externe (2) et à la première section de dérivation (81).

5. Disjoncteur basse tension (1) selon l'une quelconque des revendications 1 à 4, **caractérisé en ce que** le premier disjoncteur basse tension (1) présente une première interface de communication (57) qui est reliée de manière à communiquer avec la première unité de commande électronique (13).
